# EUROPEAN PATENT SPECIFICATION

(11) **EP 4 590 725 B1**
(45) Date of publication and mention of the grant of the patent: **26.08.2026**
(21) Application number: 23772214.5
(22) Date of filing: 15.09.2023
(51) Int. Cl.: C08C 19/22, C08C 19/25, C08F 236/10

(54) **AMINO- AND SILOXANE-FUNCTIONALIZED POLYMERS**
AMINO- UND SILOXANFUNKTIONALISIERTE POLYMERE
POLYMÈRES FONCTIONNALISÉS PAR AMINO ET SILOXANE

(30) Priority: 22.09.2022 EP 22197014
(43) Date of publication of application: 30.07.2025
(73) Proprietor: ARLANXEO Deutschland GmbH, 41540 Dormagen (DE)
(72) Inventor: STEINHAUSER, Norbert, 41539 Dormagen (DE)
(86) International application number: PCT/EP2023/075394
(87) International publication number: WO 2024/061755

(56) References cited:
- WO-A1-2016/094186
- GB-A- 2 368 069
- US-B1- 10 711 084

## Description

### Background

Diene-based polymers are commercially widely used as a rubber component in rubber compositions, for example tires and other articles. These polymers reduce the rolling resistance because of their good dynamic mechanical properties. It is known that the rolling resistance of rubber articles can be reduced further by improving the interactions of the diene polymers with fillers which are typically present in such articles. The interactions between polymers and fillers can be improved by modifying the polymers to generate functional groups. Numerous methods for the modification of diene rubbers with various chemically different modifying agents are known. For example, diene polymers having aminosiloxane end groups are reported in EP1457501 and WO2006/076629 A1. The polymers are functionalized by reacting polymer chains with a cyclic silaamino functionalizing agent. Yet, there is a continuous demand for improved or alternative functionalized diene polymers.

### Summary

In one aspect there is provided a process of making a functionalized diene polymer comprising
(i) preparing a diene polymer by a polymerization reaction that produces a reaction mixture comprising a diene polymer with a reactive polymer chain end;
(ii) reacting a first functionalisation reagent according to formula (I) 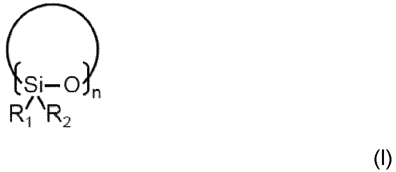 with the reactive polymer chain end to obtain a first reaction product,
(iii) subjecting the reaction mixture comprising the first reaction product to a reaction with at least one second functionalising reagent according to formula (II) 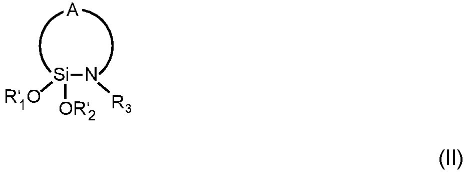 to produce a functionalized diene polymer having at least one amino group and at least one siloxane group,

wherein the diene polymer comprises at least 51% by weight, based on the total weight of the polymer, of units derived from 1,3-butadiene,
and wherein in formula (I) R₁, and R₂ represent, independently from each other and from each unit n, hydrogen or an organic residue having hdyrogen atoms and from 1 to 24 carbon atoms and wherein the organic residue optionally further comprise one or more heteroatom selected from O, S, N, Si, and combinations thereof; n represents 3, 4, 5, 6, 7 or 8;
and wherein in formula (II) R'₁, R'₂ and R₃, independently from each other, represent an organic residue comprising hdyrogen atoms and from 1 to 24 carbon atoms and wherein the organic residue optionally further comprise one or more than one heteroatom selected from O, S, N, Si, and combinations thereof;
A represents a divalent alkylene unit having from 1 to 6 carbon atoms in the alkylene unit wherein the alkylene group may be unsubstituted or substituted, in which case at least one of the hydrogen atoms of the alyklene unit is substituted by an organic residue comprising hdyrogen atoms and from 1 to 24 carbon atoms and wherein the organic residue, optionally, further comprises one or more than one heteroatom selected from O, S, N, Si and combinations thereof.

In another aspect of the present disclosure there is provided a functionalized diene polymer obtainable by the process.

In yet another aspect of the present disclosure there is provided a curable compound comprising the functionalized diene polymer and at least one curing agent for curing the functionalized diene polymer and, optionally, further comprising at least one rubber other than the functionalized polymer, at least one filler or a combination thereof.

In a further aspect of the present disclosure there is provided a method of making a curable rubber compound comprising combining at least one functionalized diene polymer with at least one rubber ingredient selected from at least one curing agent for curing the functionalized diene polymer, at least one filler, at least one rubber other than the functionalized diene polymer or a combination thereof.

In yet another aspect of the present disclosure there is provided an article comprising the reaction product of a curing reaction wherein the curing reactoin comprises curing a composition comprising the functionalized diene polymer and at least one curing agent.

In a further aspect of the present disclosure there is provided a method of making an article comprising subjecting the functionalized diene polymer to curing and shaping wherein the shaping may be carried out prior to, after or during the curing.

### Detailed Description

The present disclosure will be further illustrated in the following detailed description. In the following description certain standards (ASTM, DIN, ISO etc.) may be referred to. If not indicated otherwise, the standards are used in the version that was in force on October 1, 2020. If no version was in force at that date because, for example, the standard has expired, then the version is referred to that was in force at a date that is closest to October 1, 2020.

In the following description the amounts of ingredients of a composition or a polymer may be indicated interchangeably by "weight percent", "wt. %" or "% by weight". The terms "weight percent", "wt. %" or "% by weight" are based on the total weight of the composition or polymer, respectively, which corresponds to 100 %, unless described otherwise
The term "phr" means "parts by weight per hundred parts by weight of rubber". This term is used in rubber compounding to base the amounts of ingredients of a rubber composition on the total amount of rubber in the rubber compound. The amount of one or more ingredients of a composition (parts by weight of the one or more ingredient) are based on 100 parts by weight of rubber.

Ranges identified in this disclosure are meant to include and disclose all values between the endpoints of the range and its end points, unless stated otherwise.

The term "comprising" is used in an open, non-limiting meaning. The phrase "a composition comprising ingredients A and B" is meant to include ingredients A and B but the composition may also have additional ingredients. Contrary to the use of "comprising" the word "consisting" is used in a narrow, limiting meaning. The phrase "a composition consisting of ingredients A and B" is meant to describe a composition containing ingredients A and B but no additional ingredients.

### Functionalized diene polymers

The diene polymers according to the present disclosure are functionalized to have at least one amino and at least one siloxane group.

The diene polymers according to the present disclosure are curable and can be cured to produce articles or components of articles. Articles produced with the diene rubbers typically contain the functionalized diene poylmers in their cured form.

The diene polymers preferably are butadiene polymers and include homopolymers and copolymers of 1,3-butadiene. Preferably, the diene polymers according to the present disclosure comprise at least 51% by weight, preferably at least 60% by weight, based on the weight of the polymer, of units derived from 1,3-butadiene. In one embodiment of the present disclosure the diene polymers comprise at least 60% by weight, or at least 75% by weight, based on the total weight of the polymer, of units derived from 1,3-butadiene.

In one embodiment of the present disclosure the diene polymers comprise from 0 or 1% by weight up to 49% by weight, or from 0% or 1% by weight up to 40% by weight, based on the total weight of the polymer, of units derived from one or more comonomers.

In one embodiment of the present disclosure the diene polymers comprise at least 60% by weight, or at least 70% by weight, based on the total weight of the polymer, of units derived from 1,3-butadiene and from 0% or 1% by weight up to 40% by weight, or from 0% or 1% and up to 30% by weight of units derived from one or more comonomers.

Suitable comonomers include, but are not limited to, conjugated dienes, preferably having from 5 to 24, more preferably from 5 to 20 carbon atoms. Specific examples of conjugated dienes include, but are not limited to isoprene, 1,3-pentadiene, 2,3-dimethylbutadiene, 1-phenyl-1,3-butadiene, 1,3-hexadiene, myrcene, ocimene, farnesene and combinations thereof.

In one embodiment of the present disclosure the diene polymers comprise from 0% or 1% by weight up to 20% by weight of units derived from one or more conjugated dienes other than 1,3 butadiene.

Suitable comonomers also include vinylaromatic comonomers, preferably vinyl aromatic comonomers having from 8 to 30 carbon atoms. Specific examples of vinylaromatic comonomers include, but are not limited to, styrene, ortho-methylstyrene, meta-methylstyrene, para-methylstyrene, para-butylstyrene, vinylnaphthalene, divinylbenzene, trivinylbenzene, divinylnaphthalene, 4-Ethenyl-N,N-dimethylbenzylamine, 3-Ethenyl-N,N-dimethylbenzylamine, 2-Ethenyl-N,N-dimethylbenzylamine, 1-[(4-Ethenylphenyl)methyl]-pyrrolidine, 1-[(3-Ethenylphenyl)methyl]pyrrolidine, 1-[(2-Ethenylphenyl)methyl]pyrrolidine and combinations thereof.

In one embodiment of the present disclosure the diene polymers comprise up to 49% by weight of units derived from one or more vinylaromatic comonomer, preferably from 5 % to 40% by weight of units derived from one or more vinylaromatic comonomer. Preferably, the diene polymers of the present disclosure comprise up to 49% by weight or from 0 to 40 % by weight, based on the weight of the polymer, of units derived from styrene.

Suitable comonomers further include one or more alpha-olefins, for example, ethene, propene, 1-butene, 1-pentene, 1-hexene, 4-methyl-1-pentene,1-octene and combinations thereof.

In one embodiment of the present disclosure the diene polymers comprise from 0% or from 1% and up to 20 % by weight of units derived from ethene, propene, 1-butene, 1-pentene, 1-hexene, 4-methyl-1-pentene,1-octene and combinations thereof.

Suitable comonomers also include, but are not limited to, one or more other copolymerizable comonomers that introduce functional groups including cross-linking sites, branching sites, branches or functionalized groups. In one embodiment of the present disclosure the diene polymers comprise from 0% or from 0.1% and up to 10% by weight or from 0% or 0.1% and up to 5% by weight, based on the weight of the polymer, of units derived from one or more of such other comonomers.

Combinations of one or more of the comonomers of the same chemical type as described above as well as combinations of one or more comonomers from different chemicals types may be used.

The diene polymers according to the present disclosure preferably have a Mooney viscosity ML 1+4 at 100°C of from 10 to 200 Mooney units, for example from 30 to 150 or from 35 to 85 Mooney units.

The diene polymers according to the present disclosure preferably have a number-averaged molecular weight (Mn) of from 10,000 g/mole to 2,000,000 g/mole, or from 100,000 to 1,000,000 g/mole, for example from 100,000 to 400,000 g/mole or from 200,000 to 300,000 g/mole. In one embodiment of the present disclosure, the polymers have an Mn of from 150 kg/mole to 320 kg/mole.

The diene polymers according to the present disclosure preferably have a molecular weight distribution (MWD) from 1.0 to 15, for example from 1.0 to 5. In one embodiment of the present disclosure the polymers have an MWD of from 1.0 to 3.5 or from 1.0 to 2.0. The MWD is the ratio of the weight-averaged molecular weight (Mw) to the number averaged molecular weight Mn, i.e., MWD equals Mw/Mn.

Typically, the diene according to the present disclosure are rubbers. Rubbers typically have a glass transition temperature below 20 °C. The diene polymers according to the present disclosure preferably have a glass transition temperature (Tg) of from -120°C to less than 20°C. In a preferred embodiment of the present disclosure the polymers have a Tg of from 0°C to -110°C or from -10°C to -80°C. In one embodiment of the present disclosure the butadiene polymer has a glass transition temperature of from about -10 to -70°C.

In one embodiment of the present disclosure the diene polymers have a number-averaged molecular weight of from 100,000 to 1,000,000 and a Mooney viscosity ML 1+4 at 100°C of from 30 to 150 units and a glass transition temperature of from -110°C to 0°C.

In one embodiment the diene polymers according to the present disclosure have a Mooney viscosity ML 1+4 at 100°C of from 30 to 150 units, a molecular weight of from 100,000 to 400,000 g/mole, a glass transition temperature of from -110°C to 0°C and a molecular weight distribution (MWD) from 1.0 to 20.

### Process of making the functionalized diene polymers

The functionalized diene polymers according to the invention are obtainable by the polymerization of butadiene with or without comonomers and reaction with the first and second functionalization reagents.

The diene polymers according to the present disclosure are obtainable by an anionic polymerization or by a polymerization using coordination catalysts. Coordination catalysts in this context include Ziegler-Natta catalysts and monometallic catalyst systems. Preferred coordination catalysts include those based on Ni, Co, Ti, Zr, Nd, Gd, V, Cr, Mo, W or Fe. Preferably, the diene polymers are obtained by a polymerization comprising an anionic polymerization.

The anionic polymerization of diene polymers is known in the art. Suitable initiators for anionic solution polymerization include organo alkali metal compounds and organo alkaline earth metal compounds. Specific examples of initiators include methyllithium, ethyllithium, isopropyllithium, n-butyllithium, sec-butyllithium, pentyllithium, n-hexyllithium, cyclohexyllithium, octyllithium, decyl-lithium, 2-(6-lithio-n-hexoxy)tetrahydropyran, 3-(tert-butyldimethylsiloxy)-1-propyllithium, phenyllithium, 4-butylphenyllithium, 1-naphthyllithium, p-toluyllithium and allyllithium compounds, initiators derived from tertiary N-allylamines such as [1-(dimethylamino)-2-propenyl]lithium, [1-[bis(phenylmethyl)amino]-2-propenyl]lithium, [1-(diphenylamino)-2-propenyl]lithium, [1-(1-pyrrolidinyl)-2-propenyl]lithium, lithium amides of secondary amines such as lithium pyrrolidide, lithium piperidide, lithium hexamethylene imide, lithium 1-methyl imidazolidide, lithium 1-methyl piperazide, lithium 4-methyl piperidide, lithium 3-methyl piperidide, lithium morpholide, lithium dicyclohexylamide, lithium dibenzyl amide, lithium diphenyl amide. Di- and polyfunctional organolithium compounds can also be used, for example 1,4-dilithiobutane, dilithium piperazide. Preferred initiators include n-butyllithium and sec-butyllithium.

Controlling agents as known in the art for controlling the microstructure of the polymer, for example its content of vinyl units, may be used in the polymerization. Such agents include, for example, diethyl ether, di-n-propyl ether, diisopropyl ether, di-n-butylether, ethylene glycol dimethyl ether, ethylene glycol diethyl ether, ethylene glycol di-n-butyl ether, ethylene glycol di-tert-butyl ether, diethylene glycol dimethyl ether, diethylene glycol diethyl ether, diethylene glycol di-n-butyl ether, diethylene glycol di-tert-butyl ether, 2-(2-ethoxyethoxy)-2-methyl-propane, triethylene glycol dimethyl ether, tetrahydrofuran, ethyltetrahydrofurfuryl ether, hexyltetrahydrofurfuryl ether, 2,2-bis(2-tetrahydrofuryl)propane, dioxane, trimethylamine, triethylamine, N,N,N',N'-tetramethyl-ethylenediamine, N-methylmorpholine, N-ethylmorpholine, 1,2-dipiperidinoethane, 1,2-dipyrrolidinoethane, 1,2-dimorpholino-ethane and potassium and sodium salts of alcohols, phenols, carboxylic acids, sulphonic acids.

Preferably, the polymerization is carried out in solution, preferably with an inert aprotic solvent. Suitable inert aprotic solvents include aliphatic saturated hydrocarbons, alkenes and aromatic hydrocarbons. Specific examples of aliphatic saturated hydrocarbons include butanes, pentanes, hexanes, heptanes, octanes, decanes and cyclopentane, methylcyclopentane, cyclohexane, methylcyclohexane, ethylcyclohexane and 1,4-dimethylcyclohexane. A specific example of a suitable alkene includes 1-butene. Specific examples of suitable aromatic hydrocarbons include benzene, toluene, ethylbenzene, xylene, diethylbenzene or propylbenzene. The solvents can be used also in combination with each other or in combination with one or more polar solvent. Preferred solvents include cyclohexane, methylcyclopentane and n-hexane.

Generally, the solvents may be used in a quantity of about 100 to about 1000 g, preferably from 200 to 700 g, per 100 g of monomer.

Preferably, the polymerization is carried out by introducing monomers and solvent and then starting the polymerization by adding the polymerization initiator or initiator system and activating it if necessary. Other known methods for carrying out the polymerization may also be used, for example continuously feeding at least one feed stream comprising solvent, monomer and initiator into the reactor vessel and continuously feeding at least one product stream out of the reactor vessel. The polymerization can be carried out as a batch polymerization or as a continuous polymerization.

Typically, the reaction is carried out at a pressure between 1 to 10 bar. Typical reaction pressures include 3 to 8 bar.

The molecular weight, the molecular weight distribution and the Mooney viscosity of the polymers can be controlled as known in the art, for example by using chain transfer agents or controlling monomer feed, amounts of initiators and the reaction speed The glass transition temperature of the polymers can be controlled, for example, by the composition and amounts of monomers and comonomers.

The polymerization reaction creates reactive polymer chain ends. At least one first functionalization reagent is added to react with the reactive chain ends of the polymer and to provide a first functionalized polymer as a reaction product. The at least one second functionalization reagent is added to the reaction product and reacts with it.

The first functionalization reagent preferably is a cyclosiloxane. Suitable cyclosiloxanes correspond to the general formula (I): 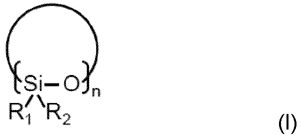 where
n represents 3, 4, 5, 6, 7, or 8 and R₁, and R₂ represent, independently from each other and from each unit n, hydrogen or an organic residue comprising hdyrogen atoms and from 1 to 24 carbon atoms and wherein the organic residue may comprise one or more heteroatoms selected from O, S, N, Si, and -Si-O- in additon to the carbon and hydrogen atoms.

Preferably, in formula (I), R₁ and R₂ represent, independently from each other and from each unit n, hydrogen, an alkyl group, an alkenyl group or a C6-C20-aryl group, i.e. an aryl group having from 6 to 20 carbon atoms. The alkyl preferably has from 1 to 20 carbon atoms, more preferably from 1 to 6 carbon atoms. The alkenyl group preferably has from 2 to 20 carbon atoms, preferably from 2 to 6 carbon atoms. The alkyl, aryl and alkenyl residues may be unsubstituted or they may be substituted, in which case at least one hydrogen atom of the residue is replaced by a substitutent selected from a halogen, (preferably Cl or F), an alkyl amino group, an alkyl phosphino group, an alkyl silyl group, an (alkylamino)alkyl group, an (alkylphosphino)alkyl group, an (alkylsilyl)alkyl group and combinations thereof. Each substitutent -other than halogens- preferably has from 1 to 19 carbon atoms and may be unsusbstituted or substituted, in which case at least one hydrogen atom of the substituent is substituted by another substitutent, which is, preferably, selected frrom a halogen, preferably Cl or F.

In a particular embodiment of the present disclosure in formula (I) R₁ is selected, indepedently of n from methyl, ethyl, or phenyl. In a preferred embodiment R1 is identical for each unit n and is selected from methyl, ethyl, or phenyl. Preferably R₂ is selected from hydrogen, methyl, ethyl, phenyl, diphenylphosphinomethyl, diphenylphosphinoethyl and vinyl (-CH=CH₂) and n is 3, 4, or 5. In another particular embodiment of the present disclosure R₁ and R₂ are both methyl and n is 3, 4 or 5.

Specific examples of suitable cyclosiloxanes according to formula (I) include, but are not limited to; 2,2,4,4,6,6-hexamethylcyclotrisiloxane, 2,2,4,4,6,6,8,8-octamethylcyclotetrasiloxane, 2,2,4,4,6,6,8,8,10,10-decamethylcyclopentasiloxane, 2,2,4,4,6,6,8,8,10,10,12,12-dodecamethylcyclohexasiloxane, 2,4,6-trimethyl-2,4,6-trivinylcyclotrisiloxane, 2,4,6-trimethyl-2,4,6-triphenylcyclotrisiloxane, 2,4,6-trimethylcyclotrisiloxane, cyclotrisiloxane, 2,4,6,8-tetramethyl-2,4,6,8-tetravinylcyclotetrasiloxane, 2,4,6,8-tetramethyl-2,4,6,8-tetraphenylcyclotetrasiloxane, 2,4,6,8-tetramethylcyclotetrasiloxane, 2,2,4,4,6,6-hexaphenylcyclotrisiloxane, 2,2,4,4,6,6,8,8-octaphenylcyclotetrasiloxane, 2,4,6,8,10-pentamethylcyclopentasiloxane, 2,4,6,8,10-pentamethyl-2,4,6,8,10-pentavinylcyclopentasiloxane, 2,4,6,8-tetraethylcyclo-tetrasiloxane, 2,4,6,8-tetramethyl-2,4,6,8-tetrakis(2-diphenylphoshinoethyl)cyclotetra-siloxane. Preferred examples include but are not limited to 2,2,4,4,6,6-hexamethylcyclotrisiloxane and 2,2,4,4,6,6,8,8-octamethylcyclotetrasiloxane.

The first functionalization reagent may be added as such, as solution or as suspension. Two or more different functionalization reagents according to the general formula (I) may be added, for example simultaneously or sequentially. The first functionalization reagent is added preferably towards the end of the polymerization reaction when the polymer chain ends are still reactive, for example when at least 90% of the monomers have been consumed and preferably after 99% of monomers have been consumed. Preferably, the functionalization reagent is added to the polymerization reaction mixture. The reaction of at least one first functionalization reagent with the reactive polymer chain ends may be carried out at the same temperature that was used for the polymerization reaction, although the temperature of the reaction mixture may be lowered or raised. prior, during or after the addition if desired. The temperature of the reaction mixture may be raised or lowered if desired for example to increase or decrease or to control the speed of the reaction with the first functionalization reagent.

Preferably, the first functionalization reagent is added in amounts such that all reactive polymer chain ends can react, but in some occasions it may be desired to add the reagent in smaller amounts, for example if the variation of different chain ends is to be kept high. Typical amounts include 0.2 to 2 molar equivalents of functionalization reagent, based on the total molar amount of initiator employed for the polymerization. Preferably, the total amount of cyclosiloxanes according to formula (I) corresponds to 0.1 to 1.5 molar equivalents of the total molar amount of initiator employed for the polymerization.

At least one second functionalization reagent is added. Preferably, the second functionalization reagent is added to the reaction mixture after the reaction of the polymer chain ends with the first reaction agent has been completed, but its addition may also start earlier, and it may overlap with the addition of the first functionalization reagent. Preferably, the second functionalization reagent is added directly to the reaction mixture.

Typically, the second functionalization reagent corresponds to the general formula (II) 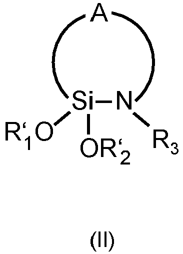
wherein R'₁, R'₂ and R₃, independently from each other represent an organic residue comprising hdyrogen atoms and from 1 to 24 carbon atoms and, optionally, may further comprise one or more than one heteroatoms selected from O, S, N, Si and combinations thereof;
A represents a divalent alkylene unit having from 1 to 6 carbon atoms in the alkylene unit wherein the alkylene group may be unsubstituted or sbstituted in which case at least one of its hydrogen atoms may be replaced by a substituent selected from halogens, preferably Cl and F, and an organic residue comprising hydrogen atoms and from 1 to 24 carbon atoms and which, optionally, furher comprises one or more heteroatoms selected from O, S, N, Si, and combinations thereof.

Preferably, in formula (II), R₃ represents a linear or branched C1-C12-alkyl group, i.e., an alkyl group having from 1 to 12 carbon atoms. The C1-C12-alkyl group may be unsusbstituted or substituted, in which case at least one hydrogen atom of the group is substituted by a substituent selected from a halogen, an alkoxy group, an alkoxysilyl group, (alkoxysilyl)alkyl group, alkylsilyl group, an (alkylsilyl)alkyl group, an (alkylamino)alkyl group, an alkylaminogroup and combinations thereof, and wherein each substituent - other than halogens- may comprise another substituent selected from halogen, phenyl, benzyl, alkylphenyl, alkyl benzyl. Preferably, the halogens are selected from Cl and F. Typically, each substitutent- other than halogens- has from 1 to 20 carbon atoms. More preferably, R₃ represents a trialkoxysilylalkyl, for example selected from trialkoxybutyl, trialkoxypropyl, trialkxoyethyl and trialkoxymethyl, and, preferably, the trialkyxoy residue is selected from trimethyloxy-, triethyloxy-, tripropyloxy-, tributyloxy-, tripentyloxy- and trihexyloxy-.

Preferably, in formula (II), R'₁ and R'₂ represent, independently from each other, a C1-C12-alkyl which may be linear or branched. More preferably R'₁ and R'₂ represent, independently from each other, a C1-C6-alkyl residue, more preferably a C1-C3-alkyl.

Preferably, in formula (II), A represents ethylene, propylene, butylene such that the resulting molecules are azasilacyclobutanes, azasilacyclopentanes or azasilacycloheptanes, respectively. The ethylene, propylene or butylene residues may be substituted in which case at least one hydrogen atoms of the residues is substituted by a halogen, preferably Cl or F, a C1-C7-alkyl group, preferably a methyl or an ethyl, or an aryl group (preferably a phenyl group) or an alkylaryl group (preferably an alkylphenyl group), an (alklyaryl)alkyl group, an arylalkyl group (preferably benzylgroup) and wherein each of the alkyl or aryl residues of the substitutents may have one or more further substituents selected from halogen, preferably Cl or F. Preferably, A is selected from ethylene, propylene and substituted propylenes including but not limited to propylene substituted once or twice by C1-C6-alkyl groups, including but not limited to 2-methylpropylene, 2,2-dimethlypropylene, 1,2-dimethylpropylene, 1,3-dimethylpropylene, 2-ethyl-propylene, 2,2-diethylpropylene, 1,2-diethylpropylene, 2-propyl-propylene, 2,2-dipropylpropylene and 1,2-dipropylpropylene.

Particular examples of functionalization reagents according to formula (II) include but are not limited to 2,2-diethoxy-1-[3-(triethoxysilyl)propyl]-1-aza-2-silacyclopentane and 1-ethyl-2,2-dimethoxy-4-methyl-1-aza-2-silacyclopentane.

The second functionalization reagent may be added as such, or in solution, or in suspension. Two or more different second functionalization reagents may be added, simultaneously or sequentially. The reaction of the second functionalization reagent with the polymer functionalized by the first functionalization agent may be carried out at the same temperature used for the polymerization reaction but if desired the temperature may be raised or lowered prior to, during or after the addition of the second functionalization reagent. The temperature may be raised or lowered if desired for example to increase or decrease or to control the speed of the reaction with the first functionalization reagent.

The second functionalization reagent may be added in an amount effective for converting all end groups of the first end group, i.e., in equimolar amounts or in molar excess. However, it may also be desired not to convert all end groups and to add the second functionalization reagent in less than equimolar amounts. Typically, the total amount of second functionalization reagent added may be in the range of from 0.2 to 2 molar equivalents, preferably in the range from 0.6 to 1.5 molar equivalents, based on the molar amount of the first functionalization reagent(s) used.

The reaction of the second functionalization reagent with the reaction product of the polymer chains and first functionalization reagent produces a functionalized polymer having at least one amino group and at least one siloxane group. Preferably, the polymer has at least one group according to formula (III): 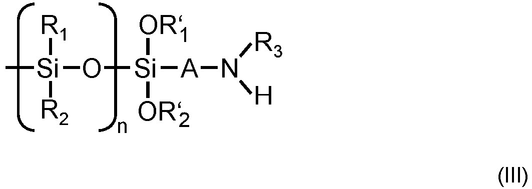 where R₁, R₂, R'₁, R'₂, R₃, A and n have the same meaning as described above for formula (I) and (II).

One or more coupling reagents known in the art for anionic or catalytic diene polymerization can be added to the reaction mixture. Examples of such coupling reagents include silicon tetrachloride, tin tetrachloride, tetraalkoxysilanes, 2,2-dimethoxy-1-thia-2-silacyclopentane, (3-glycidoxypropyl)trimethoxysilane, N,N,N',N'-tetraglycidyl-4,4'-diaminodiphenylmethane, N,N,N',N'-tetraglycidyl-1,3-bis(aminomethyl)cyclohexane. The coupling reagents may be added before, after or simultaneous with the addition of compounds of formula (II).

The functionalized polymers may be isolated by methods known in the art. The solvent can be removed from the reaction mixture as known in the art, for example by distillation, stripping with steam or by applying a vacuum. Antioxidants as known in the art may be added, for example, before or during the work up process, preferably prior to solvent removal. Examples of suitable antioxidants include sterically hindered phenols, aromatic amines, phosphites and thioethers. Extender oils as known in the art of rubber processing and compounding may be added to the reaction mixture, preferably prior to the removal of solvent, for example for providing functionalized diene polymers that are oil-extended. Suitable extender oils include TDAE (Treated Distillate Aromatic Extract) oils, MES (Mild Extraction Solvates) oils, RAE (Residual Aromatic Extract) oils, TRAE (Treated Residual Aromatic Extract) oils, naphthenic oils, or plant-based oils.

The functionalized polymers according to the present disclosure may be shaped for storage or handling or for further processing into compounds or articles. The polymers may be shaped into forms including bales, pellets, powder, sheets or granules.

The diene polymers according to the present disclosure are curable. The polymers can be cross-linked (cured), for example by reaction or activation of one or more curing agents, for producing a "vulcanizate", i.e., a cross-linked rubber product. However, the polymers according to the present disclosure may also be provided in uncured form, or in partially cross-linked form, which means they are cross-linked to some extent, but they can still be cross-linked further.

In one aspect of the present disclosure there is provided a composition comprising at least one functionalized diene polymer of the present disclosure. Such a composition may comprise at least 90 % by weight, preferably at least 96% by weight, based on the total weight of the composition, of one or more butadiene polymers according to the present disclosure. Such a composition may be in the form of a powder, in the form of granules, extruded pellets or strands, or in the form of sheets or bales. In one embodiment the composition contains at least 90% by weight, or at least 96% by weight of one or more curable polymers according to the present disclosure, and the composition is free of curing agents. Such compositions may be used, for example, to make rubber compounds.

### Compounds

Rubber compounds typically comprise at least 5% by weight, based on the weight of the compound, of at least one functionalized diene polymer according to the present disclosure and at least one ingredient for making rubber compositions. Typical ingredients include at least one curing agent, at least one filler or a combination thereof.

Therefore, in another aspect of the present disclosure there are provided rubber compositions comprising at least one diene polymer according to the present disclosure and at least one curing agent, at least one filler or a combination thereof. The rubber compositions (also referred to in the art as "compounds") may be, for example, in the form of a powder, in the form of granules, extruded pellets or strands, or in the form of sheets or bales.

### Filler

Conventional fillers as known in the art may be used. Preferably, the rubber composition comprises at least one filler, preferably a filler that is suitable for application in tires, tire components and materials for making tires. Preferably, the filler comprises one or more silicon oxide, one or more carbon blacks or a combination of one or more silicon oxide and one or more carbon black. Preferably, the filler includes silica-containing particles, preferably having a BET surface area (nitrogen absorption) of from 5 to 1,000, preferably from 20 to 400 m²/g. Such fillers may be obtained, for example, by precipitation from solutions of silicates or by flame hydrolysis of silicon halides. Silica filler particles may have particle sizes of 10 to 400 nm. The silica-containing filler may also contain oxides of Al, Mg, Ca, Ba, Zn, Zr or Ti. Other examples of silicon-oxide based fillers include aluminum silicates, alkaline earth metal silicates such as magnesium silicates or calcium silicates, preferably with BET surface areas of 20 to 400 m²/g and primary particle diameters of 10 to 400 nm, natural silicates, such as kaolin and other naturally occurring silicates including clay (layered silicas). Further examples of fillers include glass particle-based fillers like glass beads, microspheres, glass fibers and glass fiber products (mats, strands).

Polar fillers, like silica-containing fillers, may be modified to make them more hydrophobic. Suitable modification agents include silanes or silane-based compounds. Typical examples of such modifying agents include, but are not limited to compounds corresponding to the general formula (V):

(R¹R²R³O)₃Si-R⁴-X (V)

wherein each R¹, R², R³ is, independently from each other, an alkyl group, preferably R¹,R²,R³ are all methyl or all ethyl, R⁴ is an aliphatic or aromatic linking group with 1 to 20 carbon atoms and X is sulfur-containing functional group and is selected from -SH, -SCN, - C(=O)S or a polysulfide group.

Instead of, or in addition to, silicas that have been modified as described above such modification may also take place *in situ,* for example during compounding or during the process of making tires or components, for example by adding modifiers, preferably silanes or silane-based modifiers, for example including those according to formula (V), when making the rubber compounds.

Filler based on metal oxides other than silicon oxides include but are not limited to zinc oxides, calcium oxides, magnesium oxides, aluminum oxides and combinations thereof. Other fillers include metal carbonates, such as magnesium carbonates, calcium carbonates, zinc carbonates and combinations thereof, metal hydroxides, e.g. aluminum hydroxide, magnesium hydroxide and combinations thereof, salts of alpha-beta-unsaturated fatty acids and acrylic or methacrylic acids having from 3 to 8 carbon atoms including zinc acrylates, zinc diacrylates, zinc methacrylates, zinc dimethacrylates and mixtures thereof.

In another embodiment of the present disclosure the rubber compound comprises one or more fillers based on carbon, for example one or more carbon black. The carbon blacks may be produced, for example, by the lamp-black process, the furnace-black process or the gas-black process. Preferably, the carbon back has a BET surface area (nitrogen absorption) of 20 to 200 m²/g. Suitable examples include but are not limited to SAF, ISAF, HAF, FEF and GPF blacks. Other examples of suitable filler include carbon-silica dual-phase filler, lignin or lignin-based materials, starch or starch-based materials and combinations thereof.

In a preferred embodiment, the filler comprises one or more silicon oxide, carbon black or a combination thereof.

Typical amounts of filler include from 5 to 200 parts per hundred parts of rubber, for example, from 10 to 150 parts by weight, or from 10 to 95 parts by weight for 100 parts by weight of rubber.

### Curing agents:

Conventional curing agents as known in the art may be used. The curing agent is capable of crosslinking (curing) the diene polymer and is also referred to herein as "crosslinkers" or "vulcanization agent" or "curative". Suitable curing agents include, but are not limited to, sulfur, sulfur-based compounds, and organic or inorganic peroxides.

In a preferred embodiment of the present disclosure the curing agent includes a sulfur. Instead of a single curing agent a combination of one or more curing agents may be used, or a combination of one or more curing agent with one or more curing accelerator or curing catalysts may be used. Examples of sulfur-containing compounds acting as sulfur-donors include but are not limited to sulfur, sulfur halides, dithiodimorpholine (DTDM), tetramethylthiuramdisulphide (TMTD), tetraethylthiuramdisulphide (TETD), and dipentamethylenthiuramtetrasulphide (DPTT). Examples of curing accelerators include but are not limited to amine derivates, guanidine derivates, aldehydeamine condensation products, thiazoles, thiuram sulphides, dithiocarbamates and thiophospahtes.

In another embodiment of the present disclosure the curing agent includes a peroxide. Examples of peroxides used as vulcanizing agents include but are not limited to di-tert.-butyl-peroxides, di-(tert.-butyl-peroxy-trimethyl-cyclohexane), di-(tert.-butyl-peroxyisopropyl-)benzene, dichloro-benzoylperoxide, dicumylperoxides, tert.-butyl-cumyl-peroxide, dimethyl-di(tert.-butyl-peroxy)hexane and dimethyl-di(tert.-butyl-peroxy)hexine and butyl-di(tert.-butyl-peroxy)valerate. A vulcanizing accelerator of sulfene amide-type, guanidine-type, or thiuram-type can be used together with a vulcanizing agent as required. If added, the vulcanizing agent is typically present in an amount of from 0.5 to 10 parts by weight, preferably of from 1 to 6 parts by weight per 100 parts by weight of the functionalized diene polymer.

### Other rubbers

The rubber compounds and compositions according to the present disclosure may contain one or more additional rubber other than the functionalized diene polymers according to the present disclosure (referred to herein also as "other rubbers"). Examples include butadiene rubbers of the same or different composition than the functionalized diene rubbers of the present disclosure that are not functionalized or functionalized differently.

Further examples include copolymers of one or more butadiene with C1-C4-alkyl acrylates, those with an acrylonitrile content of from 10 % by weight to 40 % by weight, partially or fully hydrogenated acrylonitrile rubber, ethylene-propylene-diene copolymers, natural rubber and combinations thereof. Typical amounts of the one or more other rubbers in the compound may include, for example, from 5 to 500 parts per hundred parts of the functionalized butadiene rubber according to the present disclosure.

In a preferred embodiment of the present disclosure the compound comprises at least one butadiene polymer having a content of cis units of at least 90% by weight. Such polymers are also referred to in the art as "high-cis butadienes". Such butadiene polymers are generally obtained by using polymerization catalysts based on gadolinium, neodymium, titanium, nickel or cobalt. Butadiene polymers obtained by anionic polymerization as are the diene polymers according to the present disclosure typically have a high vinyl content, for example a content of vinyl groups of at least 10% by weight based on the weight of the polymer. The high cis-butadiene polymer may be (partially) hydrogenated or not hydrogenated. Suitable examples include rubber commercially available under the trade designation BUNA from ARLANXEO Deutschland GmbH, including, for example BUNA CB 22, BUNA CB 24, BUNA CB 25, BUNA CB 29, BUNA CB 29 TSAED. BUNA CB 29 MES and also including Cobalt BR and Li BR grades, for example, BUNA CB 1203, BUNA CB 1220 AO, BUNA CB 1221 and combinations thereof.

In one embodiment of the present disclosure the rubber compound contains one or more of the following rubbers: at least one natural rubber, at least one polybutadiene rubber having a cis content of greater than 90 wt. %, or a combination thereof.

### Rubber auxiliaries

The compositions and rubber compounds containing one or more diene polymers according to the present disclosure may contain one or more rubber auxiliaries as known in the art of rubber compounding and processing. Such further rubber auxiliaries include but are not limited to curing reaction accelerators, antioxidants, heat stabilizers, light stabilizers, processing aids, plasticizers, tackifiers, blowing agents and colorants. Processing aids include organic acids, waxes and processing oils. Examples of oils include but are not limited to MES (Mild Extraction Solvate), TDAE (Treated Distillate Aromatic Extract), RAE (Residual Aromatic Extract) and naphthenic oils and vegetable oils. Specific examples of commercial oils include those with the trade designations Nytex 4700, Nytex 8450, Nytex 5450, Nytex 832, Tufflo 2000, and Tufflo 1200. Examples of oils include functionalized oils, particularly epoxidized or hydroxylated oils.

Activators include triethanolamine, polyethylene glycol, hexanetriol. Colorants include dyes and pigments and may be organic or inorganic and include, for example, zinc white and titanium oxides.

The further rubber auxiliaries may be used in appropriate amounts depending on the intended use as known in the art. Examples of typical amounts of individual or total amounts of auxiliaries include from 0.1 wt. % to 50 wt. % based on the total weight of rubber in the compound.

For making the rubber compounds the diene polymer according to the present disclosure can be combined with one or more of the ingredients for making rubber compounds, for example by blending as known in the art of rubber processing. Blending may be done, for example, by using rollers, kneaders, internal mixers and mixing extruders. The fillers are preferably admixed to the solid diene polymer or to a mixture of it with other rubbers as known in the art, for example by using a kneader. Fillers may be added as solids, or as slurry or otherwise as known in the art. Curing agents and accelerators are preferably added separately in the final mixing stage.

### Vulcanizates

Rubber vulcanizates according to the present disclosure are obtainable by subjecting the rubber compounds of the present disclosure to one or more curing steps. Curing can be carried out as known in the art. Curing is commonly carried out at temperatures between 100 to 200° C, for example between 130 to 180° C. Curing may be carried out in molds under pressure. Typical pressures include pressures of 10 to 200 bar. Curing times and conditions depend on the actual composition of rubber compounds and the amounts and types of curatives and curable components.

### Articles

The diene polymers according to the present disclosure can be used to make articles and are particularly suitable for making tires or components of tires, including tire treads. The tires include pneumatic tires. The tires include tires for motor vehicles, aircrafts and electro vehicles and hybrid vehicles, i.e., vehicles that can be driven by a combustion engine or an electro engine or batteries. Typical components of tires include inner liner, treads, undertreads, carcass, and the sidewalls. The polydienes according to the present disclosure may also be used for making other articles, in particular articles where a reduction of rolling resistance is desired or useful. Examples include but are not limited to bearings and balls, including golf balls.

In one embodiment the diene polymers, the compositions or the compounds according to the present disclosure are used in a sealing material, for example for making O-rings, gaskets or any other seal or component of a seal.

In one embodiment the diene polymers according to the present disclosure are used as impact modifiers for thermoplastics including polystyrenes and styrene-acrylonitriles. In another embodiment the diene polymers according to the present disclosure are used for making golf balls or components thereof. In another embodiment the diene polymers according to the present disclosure are used to make shaped articles selected from profiles, membranes, damping elements and hoses.

In another embodiment the diene polymers according to the present disclosure are used to make shoe soles, cable sheaths, hoses, linings, for example roll linings, or belts including conveyor belts, escalator belts and drive belts.

The articles may be obtained by subjecting the curable rubber compound comprinsig at least one diene polymer according to the present disclosure to curing and shaping. The shaping step may take place during or after the curing step or also prior to curing step. A single curing and/or shaping step may be used or a plurality of curing and/or shaping steps may be used. During curing or shaping or both to form articles the compositions and compounds of the present disclosure can be combined with one or more additional ingredients needed for making the article.

In the following the present disclosure is further illustrated by particular embodiments and examples without, however, intending to limit the present disclosure to these specific embodiments and examples.

### Examples

The weight-average molecular weight (Mw), the number-average molecular weight Mn, the polydispersity Mw/Mn and the degree of coupling of the polymers were determined using GPC (PS (polystyrene) calibration). A modular system from Agilent, Santa Clara, CA, USA was used comprising an Agilent 1260 Refractive Index Detector, Agilent 1260 Variable Wavelength Detector, 1260 ALS autosampler, column oven (Agilent 1260 TCC), Agilent 1200 Degasser, Agilent 1100 Iso Pump and a column combination of 3 PLgel 10 µm Mixed B300x7.5 mm columns from Agilent. Tetrahydrofuran (THF) was used as solvent. Polystyrene standards from PSS Polymer Standards Service GmbH (Mainz, Germany) were used. The polymer samples dissolved in THF were filtered through syringe filters (0.45 µm PTFE membranes, diameter 25 mm). The measurements were conducted at 40 °C and with a flow rate of 1 mL/min.

The Mooney viscosity ML(1+4)100 °C was measured according to DIN 53523 or ISO296.

The comonomer content can be determined by FTIR spectroscopy on rubber films. The content of vinyl, cis and trans units in the polymer can be determined by FT-IR spectrometry using the absorbances and absorbance ratios as described in the standard ISO 12965:2000(E).

The glass transition temperature (Tg) was determined using DSC (differential scanning calometry) from the 2^{nd} heating curve at a heating rate of 20 K/min.

### Compound properties

The loss factors tan δ were measured at 0 °C and at 60 °C to determine the temperature-dependent dynamic-mechanical properties. An EPLEXOR device (Eplexor 500 N) from GABO was used for this purpose. The measurements were carried out in accordance with DIN 53513 at 10 Hz on Ares strips in the temperature range from -100 °C to 100 °C. To determine the strain-dependent dynamic-mechanical properties, ΔG' was determined as the difference between the shear modulus at 0.5% strain and the shear modulus at 15% strain as well as the maximum loss factor tan δmax. These measurements were conducted according to DIN 53513-1990 on an MTS elastomer test system on cylinder specimens (20 mm x 6 mm) with 2 mm compression at a temperature of 60 °C and a measuring frequency of 10 Hz in the strain range from 0.1% to 40%.

### Example 1 (comparative): Synthesis of styrene-butadiene copolymer

An inert 20L steel reactor was filled with 8.5 kg hexane, 5.5 mmol 2,2-bis(2-tetrahydrofuryl)-propane and 10.1 mmol n-butyllithium (as a 23% solution by weight in hexane) and heated to 38 °C. The heating circuit was shut and 1185 g of 1,3-butadiene and 315 g of styrene were added simultaneously. The polymerization was carried out under stirring for 40 minutes in total during which a peak temperature of 61 °C was reached. Ten minutes after the peak temperature had been reached, the monomer consumption was considered complete. 10.1 mmol n-octanol were added to quench the anionic polymer chain ends. The rubber solution was drained into another vessel and stabilized by adding 3 g IRGANOX 1520 (2,4-bis(octylthiomethyl)-6-methylphenol). The solvent was removed by stripping with steam. The rubber crumbs were dried at 65 °C for 16 h in a vacuum drying oven.

### Example 2 (comparative): Functionalization of styrene-butadiene copolymer by reaction with 2,2-diethoxy-1-[3-(triethoxysilyl)propyl]-1-aza-2-silacyclopentane

The procedure described in example 1 was followed except that the functionalization reagent 2,2-diethoxy-1-[3-(triethoxysilyl)propyl]-1-aza-2-silacyclopentane was added instead of n-octanol,. The functionalization reagent was added in an amount equimolar to the amount of n-butyllithium. The reactor content was stirred for 10 minutes after which the rubber solution was drained. 3 g of stabilizer (IRGANOX 1520 (2,4-bis(octylthiomethyl)-6-methylphenol)) were added before the solvent removed by stripping with steam. The rubber crumbs were dried at 65 °C for 16 h in a vacuum drying oven.

### Example 3: Functionalization of styrene-butadiene copolymer by reaction with 2,2,4,4,6,6,8,8-octamethylcyclotetrasiloxane and 2,2-diethoxy-1-[3-(triethoxysilyl)propyl]-1-aza-2-silacyclopentane

The procedure described in example 2 was followed except that 2,2,4,4,6,6,8,8-octamethylcyclotetrasiloxane was added instead of 2,2-diethoxy-1-[3-(triethoxysilyl)propyl]-1-aza-2-silacyclopentane. The functionalization reagent was added in an equimolar amount with respect to n-butyllithium. The reaction mixture was stirred for 10 minutes after which 2,2-diethoxy-1-[3-(triethoxysilyl)propyl]-1-aza-2-silacyclopentane was added in an equimolar amount with respect to the amount of n-butyllithium. The reactor content was stirred for another 10 minutes after which the rubber solution was drained, stabilized by adding 3 g Irganox^{®} 1520 (2,4-bis(octylthiomethyl)-6-methylphenol), and the solvent was removed by stripping with steam. The rubber crumbs were dried at 65 °C for 16 h in a vacuum drying oven.

### Example 4 (comparative): Functionalization of styrene-butadiene copolymer by reaction with 1-ethyl-2,2-dimethoxy-4-methyl-1-aza-2-silacyclopentane

The procedure described in example 2 was followed except that 1-ethyl-2,2-dimethoxy-4-methyl-1-aza-2-silacyclopentane was added instead of 2,2-diethoxy-1-[3-(triethoxysilyl)propyl]-1-aza-2-silacyclopentane. The functionalization reagent was added in an equimolar amount with respect to the amount of n-butyllithium.

### Example 5: Functionalization of styrene-butadiene copolymer by reaction with 2,2,4,4,6,6,8,8-octamethylcyclotetrasiloxane and 1-ethyl-2,2-dimethoxy-4-methyl-1-aza-2-silacyclopentane

The procedure described in example 3 was followed except that instead of 2,2-diethoxy-1-[3-(triethoxysilyl)propyl]-1-aza-2-silacyclopentane, the reagent 1-ethyl-2,2-dimethoxy-4-methyl-1-aza-2-silacyclopentane was added in an amount equimolar to the amount of n-butyllithium.

The properties of the rubbers from examples 1-5 are summarized in Table 1.

**Table 1: Properties of the rubbers according to Examples 1-5**

| Example | 1 | 2 | 3 | 4 | 5 |
|---|---|---|---|---|---|
| **Mₙ** [kg/mol] | 291 | 285 | 193 | 288 | 269 |
| **M_{w} / Mₙ** | 1.12 | 2.62 | 2.24 | 1.72 | 1.43 |
| **Degree of coupling** [%] | 0 | 48 | 12 | 27 | 19 |
| **ML1 +4** [MU] | 49 | 91 | 74 | 73 | 60 |
| **Vinyl content** [wt.-%] | 49 | 49 | 50 | 51 | 50 |
| **Styrene content** [wt.-%] | 21 | 21 | 21 | 21 | 21 |
| **Tg** [°C] | -21 | -23.0 | -23 | -22 | -22 |

### Rubber compounds

Tire tread rubber compounds comprising the polymers of examples 1-5 were produced with the ingredients shown in table 2. The components (except sulfur and accelerator) were mixed in a 1.5-liter kneader. Sulfur and accelerator were mixed in subsequently on a roller at 40 °C. The individual steps for preparing the compound are shown in table 3.

**Table 2: Components of tire tread rubber compounds (amounts in phr = parts by weight per 100 parts by weight of rubber)**

| | |
|---|---|
| Styrene-butadiene copolymer | 70 |
| High-cis polybutadiene (BUNA CB 24 from Arlanxeo Deutschland GmbH) | 30 |
| Silica (Ultrasil^{®} 7000) | 90 |
| Carbon black (Vulcan^{®} J/N 375) | 7 |
| TDAE oil (Vivatec 500) | 36.3 |
| Stearic acid (Palmera A 9818) | 2.5 |
| Antioxidant (Vulkanox^{®} 4020/LG der Lanxess Deutschland GmbH) | 2 |
| Antioxidant (Vulkanox^{®} HS/LG der Lanxess Deutschland GmbH) | 2 |
| Zink oxide (Rhenogran ZnO-80) | 3 |
| Light protection wax (Antilux 654) | 2 |
| Silane (Si 69^{®} from Evonik) | 7.2 |
| Diphenylguanidine (Rhenogran DPG-80) | 2.75 |
| Benzothiazolesulfenamide (Rhenogran TBBS-80) | 2 |
| Sulphur (Mahlschwefel 90/95 Chancel) | 1.6 |

**Table 3: Preparation of rubber compounds**

| | | |
|---|---|---|
| Step 1: Mixing in a 1.5 litre kneader | 0 seconds | Addition of polymers |
| | 30 seconds | Addition of 2/3 silica, 2/3 silane, stearic acid, wax, antioxidant carbon black |
| | 90 seconds | Addition of residual silica and silane |
| | 150 seconds | Addition of zinc oxide |
| | 240 seconds | Heat up to 150°C, hold at temperature for 3 min |
| | 420 seconds | Ejection |
| Step 2: Mixing on the roller | Cut the sheet three times left and right followed by 3 revolutions at 40°C and a nip of 4 mm | |
| Step 3: | 24 hours storage at 24°C | |
| Step 4: | 0 seconds | Addition of the compound from step 3 |
| Mixing in a 1.5 litre kneader | 30 seconds | Heat up to 150°C, hold at temperature for 3 min |
| | 210 seconds | Ejection |
| Step 5: Mixing on the roller | Addition of sulphur and accelerator, cut the sheet three times left and right followed by 3 rounds at 40°C and a nip of 4 mm | |

The rubber compounds were vulcanized at 160 °C for 20 minutes. The physical properties of the vulcanizates are listed in Table 4. The properties of the vulcanized rubber compound of comparative example 6 (made with non-functionalized polymer from example 1) were given an index of 100. Values greater than 100 in Table 4 indicate an improvement in percent of the property over that of comparative example 6.

**Table 4: Properties of vulcanizates**

| Vulcanizate Example | Contains the polymer from Example | Tan δ at 0 °C | Tan δ at 60 °C | Tan δ Maximum | ΔG' | Rebound at 60°C |
|---|---|---|---|---|---|---|
| 6 (comparative) | 1 | 100 | 100 | 100 | 100 | 100 |
| 7 (comparative) | 2 | 126 | 112 | 119 | 147 | 111 |
| 8 | 3 | 141 | 136 | 127 | 202 | 115 |
| 9 (comparative) | 4 | 135 | 121 | 117 | 143 | 111 |
| 10 | 5 | 145 | 136 | 120 | 175 | 115 |

The loss factor tan δ at 60 °C from the temperature-dependent dynamic-mechanical measurement, the tan δ maximum, the modulus difference G' between low and high strain from the strain-dependent dynamic-mechanical measurements and the rebound at 60°C are all indicators for the rolling resistance of a tire. The loss factor tan δ at 0 °C is an indicator for the wet slip resistance of the tire.

As can be seen from table 4, functionalization of the butadiene polymer with the cyclic aminosilanes led to vulcanizates with improved wet grip indicator and rolling resistance indicators. When using the first and the second functionalization reagents according to the present disclosure the wet grip indicator and the rolling resistance indicators of the vulcanizates were improved further.

## Claims

1. A process for making a functionalized diene polymer, comprising
(i) preparing a diene polymer by a polymerization reaction that produces a reaction mixture comprising a diene polymer with a reactive polymer chain end;
(ii) reacting a first functionalisation reagent according to formula (I) 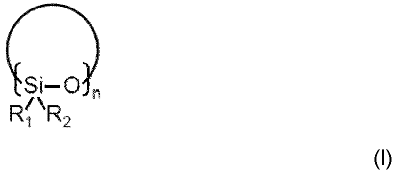 with the reactive polymer chain end to obtain a first reaction product,
(iii) subjecting the reaction mixture comprising the first reaction product to a reaction with at least one second functionalising reagent according to formula (II) 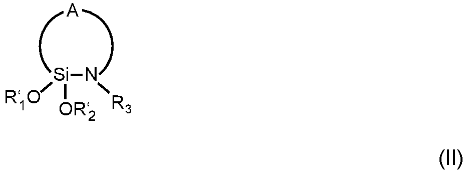 to produce a functionalized diene polymer having at least one amino group and at least one siloxane group,
wherein the diene polymer comprises at least 51% by weight, based on the total weight of the polymer, of units derived from 1,3-butadiene,
and wherein in formula (I) R₁, and R₂ represent, independently from each other and from each unit n, hydrogen or an organic residue having hdyrogen atoms and from 1 to 24 carbon atoms and wherein the organic residue optionally further comprise one or more heteroatom selected from O, S, N, Si, and combinations thereof; n represents 3, 4, 5, 6, 7 or 8;
and wherein in formula (II) R'₁, R'₂ and R₃, independently from each other, represent an organic residue comprising hdyrogen atoms and from 1 to 24 carbon atoms and wherein the organic residue optionally further comprise one or more than one heteroatom selected from O, S, N, Si, and combinations thereof;
A represents a divalent alkylene unit having from 1 to 6 carbon atoms in the alkylene unit wherein the alkylene group may be unsubstituted or substituted, in which case at least one of the hydrogen atoms of the alyklene unit is substituted by an organic residue comprising hdyrogen atoms and from 1 to 24 carbon atoms and wherein the organic residue, optionally, further comprises one or more than one heteroatom selected from O, S, N, Si and combinations thereof.

2. The process of claim 1 wherein in formula (I), R₁ and R₂ represent, independently from each other and from each unit n, hydrogen, a C1-C10-alkyl group, a C2-C10-alkenyl group or a C6-C20-aryl group, wherein the alkyl, aryl and alkenyl groups are unsubstituted or substituted, in which case at least one hydrogen atom of the group is replaced by a substitutent selected from a halogen, preferably Cl or F, an alkyl amino group, an alkyl phosphino group, an alkyl silyl group, an (alkylamino)alkyl group, an (alkylphosphino)alkyl group, an (alkylsilyl)alkyl group and combinations thereof and wherein each alkyl group of the substitutent has from 1 to 19 carbon atoms and either is unsusbstituted or substituted with a halogen, preferably Cl or F.

3. The process of either one of claims 1 or 2, wherein in formula (II),
R₃ represents a linear or branched C1-C12-alkyl group, which either is unsusbstituted or wherein at least one hydrogen atom of the alkyl group is substituted by a substituent selected from a halogen, an alkoxy group, an alkoxysilyl group, an (alkoxysilyl)alkyl group, an alkylsilyl group, an (alkylsilyl)alkyl group, an (alkylamino)alkyl group, an alkylamino group and combinations thereof, and wherein each substituent - other than halogens- may comprise another substituent selected from halogen, phenyl, benzyl, alkylphenyl, alkyl benzyl and
A represents ethylene, propylene, butylene which are unsubstitited or substituted, in which case at least one the hydrogen atoms is substituted by a halogen selected from Cl or F, a C1-C7-alkyl group, an aryl group (preferably a phenyl group), an alkylaryl group (preferably an alkylphenyl group), an (alklyaryl)alkyl group, an arylalkyl group (preferably benzylgroup) and wherein each of the alkyl or aryl residues of the substitutents may have one or more further substituents selected Cl and F.

4. The process of any one of the preceding claims, wherein in formula (II) R'₁ and R'₂ represent, independently from each other, a linear or branched C1-C12-alkyl, preferably a C1-C4-alkyl, and R₃ represents a C1-C6-alkyl group or a trialkoxysilylalkyl group, preferably selected from trialkoxybutyl, trialkoxypropyl, trialkoxyethyl and trialkoxymethyl, wherein the alkyl groups of the trialkoxy unit are selected independenty from each other from C1- to C6-alkyls.

5. The process of any one any one of the preceding claims, wherein in formula (I) R1 and R2 are selected, independently from each other and from each unit n, from a C1-C6-alkyl group, a C2-C6-alkenyl group or a C6-C12-aryl group and wherein the alkyl, aryl and alkenyl groups are unsubstituted or substituted, in which case at least one hydrogen atom of the group is replaced by a substitutent selected from CI, F, an alkyl amino group, an alkyl phosphino group, an alkyl silyl group, an (alkylamino)alkyl group, an (alkylphosphino)alkyl group, an (alkylsilyl)alkyl group and combinations thereof and wherein each alkyl group of the substitutent has from 1 to 19 carbon atoms and either is unsusbstituted or substituted with a halogen, preferably Cl or F.

6. The process of any one of the preceding claims, wherein the first functionalisation reagent is selected from 2,2,4,4,6,6-hexamethylcyclotrisiloxane, 2,2,4,4,6,6,8,8-octamethylcyclotetrasiloxane, 2,2,4,4,6,6,8,8,10,10-decamethylcyclopentasiloxane, 2,2,4,4,6,6,8,8,10,10,12,12-dodecamethylcyclohexasiloxane, 2,4,6-trimethyl-2,4,6-trivinylcyclotrisiloxane, 2,4,6-trimethyl-2,4,6-triphenylcyclotrisiloxane, 2,4,6-trimethylcyclotrisiloxane, cyclotrisiloxane, 2,4,6,8-tetramethyl-2,4,6,8-tetravinylcyclotetrasiloxane, 2,4,6,8-tetramethyl-2,4,6,8-tetraphenylcyclotetrasiloxane, 2,4,6,8-tetramethylcyclotetrasiloxane, 2,2,4,4,6,6-hexaphenylcyclotrisiloxane, 2,2,4,4,6,6,8,8-octaphenylcyclotetrasiloxane, 2,4,6,8,10-pentamethylcyclopentasiloxane, 2,4,6,8,10-pentamethyl-2,4,6,8,10-pentavinylcyclopentasiloxane, 2,4,6,8-tetraethylcyclo-tetrasiloxane, 2,4,6,8-tetramethyl-2,4,6,8-tetrakis(2-diphenylphoshinoethyl)cyclotetra-siloxane.

7. The process of any one of the preceding claims wherein the functionalized diene polymer comprises up to 49% by weight, based on the total weight of the polymer, of units derived from one or more comonomers selected from one or more conjugated dienes having from 5 to 20 carbon atoms other than 1,3-butadiene, one or more vinylaromatic comonomers having from 8 to 30 carbon atoms, preferably a styrene, and combinations thereof.

8. The process of any one of the preceding claims wherein the functionalized diene polymer has at least one of the following properties: a number-averaged molecular weight of from 100,000 to 1,000,000, determined by gel permeation chromatography with polystyrene calibration, a Mooney viscosity ML 1+4 at 100°C, determined according to DIN 53523, of from 30 to 150 units and a glass transition temperature of from -110°C to 0°C determined by differential scanning calometry (DSC) from the 2^{nd} heating curve at a heating rate of 20 K/min.

9. The process of any one of the preceding claims wherein the functionalized diene polymer has at least one group according to the general formula (III): 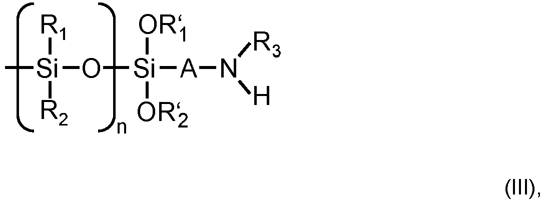 wherein R₁, R₂, R'₁, R'₂, A, R₃ and n have the same meaning as in claim 1.

10. A functionalized diene polymer obtainable by the process according to any one of the preceding claims.

11. A curable compound comprising the functionalized diene polymer according to claim 10 and at least one curing agent for curing the functionalized diene polymer and, optionally, further comprising at least one rubber other than the functionalized polymer, at least one filler or a combination thereof.

12. A method of making a curable rubber compound comprising combining at least one functionalized diene polymer as defined in claim 10 with at least one rubber ingredient selected from at least one curing agent for curing the functionalized diene polymer, at least one filler, at least one rubber other than the functionalized diene polymer or a combination thereof.

13. An article comprising the reaction product of a curing reaction wherein the curing reactoin comprises curing a composition comprising the functionalized diene polymer according to claim 10 and at least one curing agent.

14. The article of claim 13 wherein the article is a tire or a component of a tire.

15. A method of making an article comprising subjecting a composition comprising the functionlaized diene polymer of claim 10 to curing and shaping wherein the shaping may be carried out prior to, after or during the curing.

## Patentansprüche

1. Verfahren zur Herstellung eines funktionalisierten Dienpolymers, umfassend
(i) Herstellen eines Dienpolymers durch eine Polymerisationsreaktion, die eine Reaktionsmischung ergibt, die ein Dienpolymer mit einem reaktiven Polymerkettenende umfasst;
(ii) Umsetzen eines ersten Funktionalisierungsreagens gemäß Formel (I) 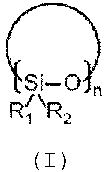 mit dem reaktiven Polymerkettenende unter Erhalt eines ersten Reaktionsprodukts,
(iii) Umsetzen der Reaktionsmischung, die das erste Reaktionsprodukt umfasst, mit mindestens einem zweiten Funktionalisierungsreagens gemäß Formel (II) 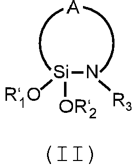
zu einem funktionalisierten Dienpolymer mit mindestens einer Aminogruppe und mindestens einer Siloxangruppe,
wobei das Dienpolymer mindestens 51 Gew.-%, bezogen auf das Gesamtgewicht des Polymers, von 1,3-Butadien abgeleitete Einheiten umfasst,
und wobei in Formel (I) R₁ und R₂ unabhängig voneinander und von jeder Einheit n für Wasserstoff oder einen organischen Rest mit Wasserstoffatomen und 1 bis 24 Kohlenstoffatomen stehen und wobei der organische Rest gegebenenfalls ferner ein oder mehrere Heteroatome, die aus O, S, N, Si und Kombinationen davon ausgewählt sind, umfasst; n für 3, 4, 5, 6, 7 oder 8 steht;
und wobei in Formel (II) R'₁, R'₂ und R₃ unabhängig voneinander für einen organischen Rest mit Wasserstoffatomen und 1 bis 24 Kohlenstoffatomen steht und wobei der organische Rest gegebenenfalls ferner ein oder mehrere Heteroatome, die aus O, S, N, Si und Kombinationen davon ausgewählt sind, umfasst;
A für eine zweiwertige Alkyleneinheit mit 1 bis 6 Kohlenstoffatomen in der Alkyleneinheit steht, wobei die Alkylengruppe unsubstituiert oder substituiert sein kann, wobei in letzterem Fall mindestens eines der Wasserstoffatome der Alkyleneinheit durch einen organischen Rest mit Wasserstoffatomen und 1 bis 24 Kohlenstoffatomen substituiert ist, und wobei der organische Rest gegebenenfalls ferner ein oder mehrere Heteroatome, die aus O, S, N, Si und Kombinationen davon ausgewählt sind, umfasst.

2. Verfahren nach Anspruch 1, wobei in Formel (I) R₁ und R₂ unabhängig voneinander und von jeder Einheit n für Wasserstoff, eine C1-C10-Alkylgruppe, eine C2-C10-Alkenylgruppe oder eine C6-C20-Arylgruppe stehen, wobei die Alkyl-, Aryl- und Alkenylgruppen unsubstituiert oder substituiert sind, wobei in letzterem Fall mindestens ein Wasserstoffatom der Gruppe durch einen Substituenten, der aus einem Halogen, vorzugsweise Cl oder F, einer Alkylaminogruppe, einer Alkylphosphinogruppe, einer Alkylsilylgruppe, einer (Alkylamino)alkylgruppe, einer (Alkylphosphino)alkylgruppe, einer (Alkylsilyl)alkylgruppe und Kombinationen davon ausgewählt ist, ersetzt ist und wobei jede Alkylgruppe des Substituenten 1 bis 19 Kohlenstoffatome aufweist und entweder unsubstituiert oder durch ein Halogen, vorzugsweise Cl oder F, substituiert ist.

3. Verfahren nach einem der Ansprüche 1 oder 2, wobei in Formel (II)
R₃ für eine lineare oder verzweigte C1-C12-Alkylgruppe steht, die entweder unsubstituiert ist oder wobei mindestens ein Wasserstoffatom der Alkylgruppe durch einen Substituenten, der aus einem Halogen, einer Alkoxygruppe, einer Alkoxysilylgruppe, einer (Alkoxysilyl)alkylgruppe, einer Alkylsilylgruppe, einer (Alkylsilyl)alkylgruppe, einer (Alkylamino)alkylgruppe, einer Alkylaminogruppe und Kombinationen davon ausgewählt ist, substituiert ist und wobei jeder Substituent - mit Ausnahme von Halogenen - einen anderen Substituenten, der aus Halogen, Phenyl, Benzyl, Alkylphenyl und Alkylbenzyl ausgewählt ist, umfassen kann, und
A für Ethylen, Propylen, Butylen, die unsubstituiert oder substituiert sind, steht, wobei in letzterem Fall mindestens eines der Wasserstoffatome durch ein aus Cl oder F ausgewähltes Halogen, eine C1-C7-Alkylgruppe, eine Arylgruppe (vorzugsweise eine Phenylgruppe), eine Alkylarylgruppe (vorzugsweise eine Alkylphenylgruppe), eine (Alkylaryl)alkylgruppe, eine Arylalkylgruppe (vorzugsweise eine Benzylgruppe) substituiert ist und wobei jeder der Alkyl- oder Arylreste der Substituenten einen oder mehrere weitere Substituenten, die aus Cl und F ausgewählt sind, aufweisen kann.

4. Verfahren nach einem der vorhergehenden Ansprüche, wobei in Formel (II) R'₁ und R'₂ unabhängig voneinander für ein lineares oder verzweigtes C1-C12-Alkyl, vorzugsweise ein C1-C4-Alkyl, stehen und R₃ für eine C1-C6-Alkylgruppe oder eine Trialkoxysilylalkylgruppe, die vorzugsweise aus Trialkoxybutyl, Trialkoxypropyl, Trialkoxyethyl und Trialkoxymethyl ausgewählt ist, steht, wobei die Alkylgruppen der Trialkoxyeinheit unabhängig voneinander aus C1- bis C6-Alkylgruppen ausgewählt sind.

5. Verfahren nach einem der vorhergehenden Ansprüche, wobei in Formel (I) R1 und R2 unabhängig voneinander und von jeder Einheit n aus einer C1-C6-Alkylgruppe, einer C2-C6-Alkenylgruppe oder einer C6-C12-Arylgruppe ausgewählt sind und wobei die Alkyl-, Aryl- und Alkenylgruppen unsubstituiert oder substituiert sind, wobei in letzterem Fall mindestens ein Wasserstoffatom der Gruppe durch einen Substituenten, der aus Cl, F, einer Alkylaminogruppe, einer Alkylphosphinogruppe, einer Alkylsilylgruppe, einer (Alkylamino)alkylgruppe, einer (Alkylphosphino)alkylgruppe, einer (Alkylsilyl)alkylgruppe und Kombinationen davon ausgewählt ist, ersetzt ist und wobei jede Alkylgruppe des Substituenten 1 bis 19 Kohlenstoffatome aufweist und entweder unsubstituiert oder durch ein Halogen, vorzugsweise Cl oder F, substituiert ist.

6. Verfahren nach einem der vorhergehenden Ansprüche, wobei das erste Funktionalisierungsreagens aus 2,2,4,4,6,6-Hexamethylcyclotrisiloxan, 2,2,4,4,6,6,8,8-Octamethylcyclotetrasiloxan, 2,2,4,4,6,6,8,8,10,10-Decamethylcyclopentasiloxan, 2,2,4,4,6,6,8,8,10,10,12,12-Dodecamethylcyclohexasiloxan, 2,4,6-Trimethyl-2,4,6-trivinylcyclotrisiloxan, 2,4,6-Trimethyl-2,4,6-triphenylcyclotrisiloxan, 2,4,6-Trimethylcyclotrisiloxan, Cyclotrisiloxan, 2,4,6,8-Tetramethyl-2,4,6,8-tetravinylcyclotetrasiloxan, 2,4,6,8-Tetramethyl-2,4,6,8-tetraphenylcyclotetrasiloxan, 2,4,6,8-Tetramethylcyclotetrasiloxan, 2,2,4,4,6,6-Hexaphenylcyclotrisiloxan, 2,2,4,4,6,6,8,8-Octaphenylcyclotetrasiloxan, 2,4,6,8,10-Pentamethylcyclopentasiloxan, 2,4,6,8,10-Pentamethyl-2,4,6,8,10-pentavinylcyclopentasiloxan, 2,4,6,8-Tetraethylcyclotetrasiloxan, 2,4,6,8-Tetramethyl-2,4,6,8-tetrakis(2-diphenylphoshinoethyl)cyclotetrasiloxan ausgewählt ist.

7. Verfahren nach einem der vorhergehenden Ansprüche, wobei das funktionalisierte Dienpolymer bis zu 49 Gew.-%, bezogen auf das Gesamtgewicht des Polymers, von einem oder mehreren Comonomeren, die aus einem oder mehreren konjugierten Dienen mit 5 bis 20 Kohlenstoffatomen mit Ausnahme von 1,3-Butadien, einem oder mehreren vinylaromatischen Comonomeren mit 8 bis 30 Kohlenstoffatomen, vorzugsweise einem Styrol, und Kombinationen davon ausgewählt sind, abgeleitete Einheiten umfasst.

8. Verfahren nach einem der vorhergehenden Ansprüche, wobei das funktionalisierte Dienpolymer mindestens eine der folgenden Eigenschaften aufweist: ein zahlengemitteltes Molekulargewicht von 100.000 bis 1.000.000, bestimmt durch Gelpermeationschromatographie mit Polystyrolkalibrierung, eine Mooney-Viskosität ML 1+4 bei 100 °C, bestimmt nach DIN 53523, von 30 bis 150 Einheiten und eine Glasübergangstemperatur von -110 °C bis 0 °C, bestimmt durch dynamische Differenzkalorimetrie (DSC) aus der 2. Aufheizkurve bei einer Aufheizrate von 20 K/min.

9. Verfahren nach einem der vorhergehenden Ansprüche, wobei das funktionalisierte Dienpolymer mindestens eine Gruppe gemäß der allgemeinen Formel (III) aufweist: 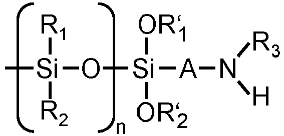 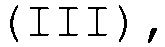 wobei R₁, R₂, R'₁, R'₂, A, R₃ und n die gleiche Bedeutung wie in Anspruch 1 haben.

10. Funktionalisiertes Dienpolymer, erhältlich durch das Verfahren nach einem der vorhergehenden Ansprüche.

11. Härtbare Masse, umfassend das funktionalisierte Dienpolymer nach Anspruch 10 und mindestens ein Härtungsmittel zum Härten des funktionalisierten Dienpolymers und gegebenenfalls ferner umfassend mindestens einen Kautschuk, der von dem funktionalisierten Dienpolymer verschieden ist, mindestens einen Füllstoff oder eine Kombination davon.

12. Verfahren zur Herstellung einer härtbaren Kautschukmasse, umfassend das Kombinieren mindestens eines funktionalisierten Dienpolymers gemäß Anspruch 10 mit mindestens einem aus mindestens einem Härtungsmittel zum Härten des funktionalisierten Dienpolymers, mindestens einem Füllstoff, mindestens einem Kautschuk, der von dem funktionalisierten Dienpolymer verschieden ist, oder einer Kombination davon ausgewählten Kautschukbestandteil.

13. Gegenstand, umfassend das Reaktionsprodukt einer Härtungsreaktion, wobei die Härtungsreaktion das Härten einer Zusammensetzung, die das funktionalisierte Dienpolymer nach Anspruch 10 und mindestens ein Härtungsmittel umfasst, umfasst.

14. Gegenstand nach Anspruch 13, wobei es sich bei dem Gegenstand um einen Reifen oder eine Komponente eines Reifens handelt.

15. Verfahren zur Herstellung eines Gegenstands, umfassend das Härten und Formen einer Zusammensetzung, die das funktionalisierte Dienpolymer nach Anspruch 10 umfasst, wobei das Formen vor, nach oder während des Härtens durchgeführt werden kann.

## Revendications

1. Procédé pour la préparation d'un polymère de diène fonctionnalisé, comprenant
(i) préparation d'un polymère de diène par une réaction de polymérisation qui produit un mélange réactionnel comprenant un polymère de diène ayant une extrémité de chaîne polymère réactive ;
(ii) mise en réaction d'un premier réactif de fonctionnalisation selon la formule (I) 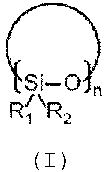 avec l'extrémité de chaîne polymère réactive pour obtenir un premier produit de réaction,
(iii) soumission du mélange réactionnel comprenant le premier produit de réaction à une réaction avec au moins un second réactif de fonctionnalisation selon la formule (II) 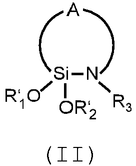
pour préparer un polymère de diène fonctionnalisé ayant au moins un groupe amino et au moins un groupe siloxane, dans lequel le polymère de diène comprend au moins 51 % en poids, par rapport au poids total du polymère, de motifs issus du 1,3-butadiène,
et dans lequel, dans la formule (I), R₁, et R₂ représentent, indépendamment l'un de l'autre et de chaque motif n, hydrogène ou un radical organique ayant des atomes d'hydrogène et de 1 à 24 atomes de carbone et dans lequel le radical organique comprend éventuellement en outre un ou plusieurs hétéroatomes choisis parmi O, S, N, Si, et des combinaisons correspondantes ; n représente 3, 4, 5, 6, 7 ou 8 ;
et dans lequel, dans la formule (II), R'₁, R'₂ et R₃, indépendamment les uns des autres, représentent un radical organique comprenant des atomes d'hydrogène et de 1 à 24 atomes de carbone et le radical organique comprenant éventuellement en outre un ou plus d'un hétéroatome choisi parmi O, S, N, Si, et des combinaisons correspondantes ;
A représente un motif alkylène divalent ayant de 1 à 6 atomes de carbone dans le motif alkylène, le groupe alkylène pouvant être non substitué ou substitué, auquel cas au moins un des atomes d'hydrogène du motif alkylène est remplacé par un radical organique comprenant des atomes d'hydrogène et de 1 à 24 atomes de carbone et dans lequel le radical organique, éventuellement, comprend en outre un ou plusieurs hétéroatomes choisis parmi O, S, N, Si, et des combinaisons correspondantes.

2. Procédé selon la revendication 1, dans lequel, dans la formule (I), R₁ et R₂ représentent, indépendamment l'un de l'autre et de chaque motif n, hydrogène, un groupe alkyle en C1-C10, un groupe alcényle en C2-C10 ou un groupe aryle en C6-C20, dans lequel les groupes alkyle, aryle et alcényle sont non substitués ou substitués, auquel cas au moins un atome d'hydrogène du groupe est remplacé par un substituant choisi parmi un halogène, de préférence Cl ou F, un groupe alkylamino, un groupe alkylphosphino, un groupe alkylsilyle, un groupe (alkylamino)alkyle, un groupe (alkylphosphino)alkyle, un groupe (alkylsilyl)alkyle et des combinaisons correspondantes, chaque groupe alkyle du substituant ayant de 1 à 19 atomes de carbone et étant soit non substitué, soit substitué par un halogène, de préférence Cl ou F.

3. Procédé selon l'une ou l'autre des revendications 1 ou 2, dans lequel, dans la formule (II),
R₃ représente un groupe en C1-C12-alkyle linéaire ou ramifié, qui est soit non substitué, soit dans lequel au moins un atome d'hydrogène du groupe alkyle est remplacé par un substituant choisi parmi un halogène, un groupe alcoxy, un groupe alcoxysilyle, un groupe (alcoxysilyl)alkyle, un groupe alkylsilyle, un groupe (alkylsilyl)alkyle, un groupe (alkylamino)alkyle, un groupe alkylamino et des combinaisons correspondantes, et où chaque substituant - autres que des halogènes - peut comprendre un autre substituant choisi parmi halogène, phényle, benzyle, alkylphényle, alkylbenzyle et
A représente éthylène, propylène, butylène qui sont non substitués ou substitués, auquel cas au moins un des atomes d'hydrogène est remplacé par un halogène choisi parmi Cl ou F, un groupe alkyle en C1-C7, un groupe aryle (de préférence un groupe phényle), un groupe alkylaryle (de préférence un groupe alkylphényle), un groupe (alkylaryle)alkyle, un groupe arylalkyle (de préférence un groupe benzyle) et chacun des radicaux alkyle ou aryle des substituants peut avoir un ou plusieurs autres substituants choisis parmi Cl et F.

4. Procédé selon l'une quelconque des revendications précédentes, dans lequel dans la formule (II) R'₁ et R'₂ représentent, indépendamment l'un de l'autre, un alkyle en C1-C12 linéaire ou ramifié, de préférence un alkyle en C1-C4, et R₃ représente un groupe alkyle en C1-C6 ou un groupe trialcoxysilylalkyle, de préférence choisi parmi trialcoxybutyle, trialcoxypropyle, trialcoxyéthyle et trialcoxyméthyle, dans lequel les groupes alkyle du motif trialcoxy sont choisis indépendamment l'un de l'un de l'autre parmi des alkyles en C1-C6.

5. Procédé selon l'une quelconque des revendications précédentes, dans lequel, dans la formule (I), R₁ et R₂ sont choisis, indépendamment l'un de l'autre et de chaque motif n, parmi un groupe alkyle en C1-C6, un groupe alcényle en C2-C6 ou un groupe aryle en C6-C12 et dans lequel les groupes alkyle, aryle et alcényle sont non substitués ou substitués, auquel cas au moins un atome d'hydrogène du groupe est remplacé par un substituant choisi parmi Cl, F, un groupe alkylamino, un groupe alkyphosphino, un groupe alkylsilyle, un groupe (alkylamino)alkyle, un groupe (alkylphosphino)alkyle, un groupe (alkylsilyl)alkyle et des combinaisons correspondantes, chaque groupe alkyle du substituant ayant de 1 à 19 atomes de carbone et étant soit non substitué, soit substitué par un halogène, de préférence Cl ou F.

6. Procédé selon l'une quelconque des revendications précédentes, dans lequel le premier réactif de fonctionnalisation est choisi parmi 2,2,4,4,6,6-hexaméthylcyclotrisiloxane, 2,2,4,4,6,6,8,8-octaméthylcyclotétrasiloxane, 2,2,4,4,6,6,8,8,10,10-décaméthylcyclopentasiloxane, 2,2,4,4,6,6,8,8,10,10,12,12-dodécaméthylcyclohexasiloxane, 2,4,6-triméthyl-2,4,6-trivinylcyclotrisiloxane, 2,4,6-triméthyl-2,4,6-triphénylcyclotrisiloxane, 2,4,6-triméthylcyclotrisiloxane, cyclotrisiloxane, 2,4,6,8-tétraméthyl-2,4,6,8-tétravinylcyclotétrasiloxane, 2,4,6,8-tétraméthyl-2,4,6,8-tétraphénylcyclotétrasiloxane, 2,4,6,8-tétraméthylcyclotétrasiloxane, 2,2,4,4,6,6-hexaphénylcyclotrisiloxane, 2,2,4,4,6,6,8,8-octaphénylcyclotétrasiloxane, 2,4,6,8,10-pentaméthylcyclopentasiloxane, 2,4,6,8,10-pentaméthyl-2,4,6,8,10-pentavinylcyclopentasiloxane, 2,4,6,8-tétraéthylcyclotétrasiloxane, 2,4,6,8-tétraméthyl-2,4,6,8-tétrakis(2-diphénylphoshinoéthyl)cyclotétrasiloxane.

7. Procédé selon l'une quelconque des revendications précédentes, dans lequel le polymère de diène fonctionnalisé comprend jusqu'à 49 % en poids, par rapport au poids total du polymère, de motifs issus d'un ou plusieurs comonomères choisis parmi un ou plusieurs diènes conjugués ayant de 5 à 20 atomes de carbone autres que le 1,3-butadiène, un ou plusieurs comonomères vinylaromatiques ayant de 8 à 30 atomes de carbone, de préférence un styrène, et des combinaisons correspondantes.

8. Procédé selon l'une quelconque des revendications précédentes, dans lequel le polymère de diène fonctionnalisé a au moins une des propriétés suivantes : un poids moléculaire moyen en nombre de 100 000 à 1 000 000 déterminé par chromatographie par perméation de gel avec un étalonnage de polystyrène, une viscosité Mooney ML 1+4 à 100 °C déterminée selon la norme DIN 53523, de 30 à 150 unités et une température de transition vitreuse de -110 °C à 0 °C déterminée par calorimétrie différentielle à balayage (DSC) à partir de la deuxième courbe de chauffe à une vitesse de chauffe de 20 K/min.

9. Procédé selon l'une quelconque des revendications précédentes, dans lequel le polymère de diène fonctionnalisé possède au moins un groupe selon la formule générale (III) : 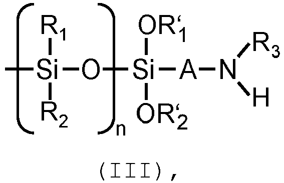 dans laquelle R₁, R₂, R'₁, R'₂, A, R₃ et n ont la même signification que dans la revendication 1.

10. Polymère de diène fonctionnalisé pouvant être obtenu par le procédé selon l'une quelconque des revendications précédentes.

11. Composé durcissable comprenant le polymère de diène fonctionnalisé selon la revendication 10 et au moins un agent durcisseur pour durcir le polymère de diène fonctionnalisé et, éventuellement, comprenant en outre au moins un caoutchouc autre que le polymère fonctionnalisé, au moins une charge ou une combinaison correspondante.

12. Procédé de préparation d'un composé de caoutchouc durcissable comprenant la combinaison d'au moins un polymère de diène fonctionnalisé tel que défini dans la revendication 10 avec au moins un ingrédient de caoutchouc choisi parmi au moins un agent de durcissement pour durcir le polymère de diène fonctionnalisé, au moins une charge, au moins un caoutchouc autre que le polymère de diène fonctionnalisé ou une combinaison correspondante.

13. Article comprenant le produit de réaction d'une réaction de durcissement, dans lequel la réaction de durcissement comprend le durcissement d'une composition comprenant le polymère de diène fonctionnalisé selon la revendication 10 et au moins un agent de durcissement.

14. Article selon la revendication 13, dans lequel l'article est un pneu ou un composant d'un pneu.

15. Procédé de préparation d'un article comprenant la soumission d'une composition comprenant le polymère de diène fonctionnalisé de la revendication 10 à un durcissement et à un façonnage, dans lequel le façonnage peut être effectué avant, après ou pendant le durcissement.
